# FASCICULE DE BREVET EUROPEEN

(11) **EP 2 232 344 B1**
(45) Date de publication et mention de la délivrance du brevet: **02.11.2011**
(21) Numéro de dépôt: 08867576.4
(22) Date de dépôt: 19.12.2008
(51) Int. Cl.: G05B 19/042, G06F 3/045

(54) **PROCÉDÉ DE DÉTECTION D'UNE VARIATION ANGULAIRE D'UNE TRAJECTOIRE DE COMMANDE SUR UNE SURFACE TACTILE ET MODULE DE COMMANDE CORRESPONDANT**
VERFAHREN ZUR ERKENNUNG EINER WINKELVERÄNDERUNG EINES STEUERWEGES AUF EINER BERÜHRUNGSFLÄCHE UND ENTSPRECHENDES STEUERMODUL
METHOD FOR DETECTING AN ANGULAR VARIATION OF A CONTROL PATH ON A TOUCH SURFACE AND CORRESPONDING CONTROL MODULE

(30) Priorité: 20.12.2007 FR 0708910
(43) Date de publication de la demande: 29.09.2010
(73) Titulaire: DAV, 94000 Creteil (FR)
(72) Inventeur: COTTAREL, Bruno, F-74106 Annemasse (FR); DE VAUX BIDON, Florent, F-74106 Annemasse (FR); CHARTRAIN, Cédric, F-74106 Annemasse (FR)
(74) Mandataire: Benoit, Monique
(86) Numéro de dépôt international: PCT/EP2008/068025
(87) Numéro de publication internationale: WO 2009/083497

(56) Documents cités:
- FR-A- 2 683 649
- US-A- 5 903 229
- US-A1- 2004 021 633
- US-A1- 2007 284 154
- US-B1- 6 298 566

## Description

La présente invention concerne un procédé de détermination d'un angle élémentaire d'une trajectoire de commande sur une surface tactile ainsi qu'un procédé de détection d'une variation angulaire sur une surface tactile.

L'invention concerne également un module de commande à surface tactile correspondant utilisant notamment des résistances sensibles à la pression (également connu sous le nom de capteur FSR pour « Force Sensing Resistor » en anglais).

L'invention s'applique plus particulièrement à la commande d'un organe électrique ou électronique d'un véhicule automobile telle que la commande d'un écran multimédia ou d'un système de climatisation.

On a proposé, plus récemment d'utiliser pour ces commandes, des surfaces tactiles permettant de détecter un appui simple du doigt d'un utilisateur pour déclencher un type particulier d'action ou de commande en fonction de la position de l'appui détecté et/ou du déplacement ultérieur de cet appui sur la surface.

Ces surfaces tactiles utilisent de plus en plus la technologie des résistances sensibles à la pression, qui devancent d'autres technologies équivalentes, comme par exemple des technologies capacitives ou encore optiques, grâce à sa facilité de mise en oeuvre et à sa robustesse.

De tels capteurs sont par exemple connus sous le nom « tablette digitalisante » (dénomination anglaise "Digitizer pad") et on cite comme art antérieur les documents suivants : US 4,810,992, US 5,008,497, FR 2683649 ou encore EP 0 541 102.

Ces capteurs comprennent des couches semi-conductrices prises en sandwich entre par exemple une couche conductrice et une couche résistive. En exerçant une pression sur la couche FSR, sa résistance ohmique diminue, permettant ainsi, par application d'une tension adaptée, de mesurer la pression appliquée et/ou la localisation de l'endroit où la pression est exercée.

Les coordonnées délivrées par le capteur sont ensuite exploitées pour la réalisation de la commande d'une fonction spécifique électrique associée à la zone touchée par le doigt de l'utilisateur.

Dans certains cas où l'on souhaite détecter une trajectoire particulière du doigt de l'utilisateur, comme par exemple une trajectoire de commande circulaire, il est notamment prévu des surfaces tactiles dont la forme guide le doigt. Par exemple, on connaît des capteurs à surface tactile en forme de couronne ou en forme de bandes d'arc de cercle ou bien encore présentant une forme de bande rectiligne.

Par ailleurs, lorsque la surface tactile présente une forme quelconque, on connaît d'autres modules de commande comportant des unités de traitement mettant en oeuvre des algorithmes de calcul de la variation angulaire de la trajectoire d'un doigt de commande.

Ces calculs sont notamment réalisés à partir des informations des déplacements parcourus par le doigt de commande et par l'utilisation de fonctions trigonométriques telles que la fonction « arc tangente ».

Cependant, ces fonctions nécessitent une capacité mémoire importante et engendrent de lourds temps de calcul, souvent incompatibles avec les contraintes liées à l'industrie automobile.

En effet, les spécifications de coût et d'encombrement nécessitent l'utilisation de petits microcontrôleurs de faible capacité pouvant être par exemple, intégrés dans la console avant d'un véhicule afin de commander les organes électronique ou électrique du véhicule.

Le but de la présente invention est donc de proposer un procédé de détection et un module de commande à surface tactile permettant de déterminer la variation angulaire d'une trajectoire d'une commande adaptés pour des microcontrôleurs de petite capacité et de faible coût.

A cet effet, l'invention a pour objet un procédé de détermination d'un angle élémentaire d'une trajectoire de commande sur une surface tactile **caractérisé en ce que** :
- on mesure deux valeurs de déplacements élémentaires selon deux axes perpendiculaires au cours d'une durée prédéterminée,
- on compare lesdites valeurs à des plages de valeurs unitaires de déplacements élémentaires d'un tableau de données de référence et,
- on attribue une donnée de référence représentative d'un angle à un angle élémentaire de la trajectoire de commande.

Suivant d'autres caractéristiques du procédé de détermination d'un angle élémentaire d'une trajectoire de commande sur une surface tactile,
- la donnée de référence représentative d'un angle est un nombre entier ou un caractère,
- on détermine d'abord un angle élémentaire intermédiaire à partir duquel on détermine ensuite l'angle élémentaire de la trajectoire de commande relatif à un axe, d'après le sens d'orientation de chaque déplacement élémentaire,
- ladite donnée de référence est représentative d'un angle nul lorsque la somme des deux valeurs de déplacements élémentaires est inférieure à un seuil prédéterminé,
- on divise une valeur de déplacement élémentaire selon un axe par un nombre entier si la valeur dudit déplacement est supérieure à la valeur unitaire de déplacement élémentaire maximale selon cet axe dans le tableau de données de référence,

L'invention a aussi pour objet un procédé de détection d'une variation angulaire d'une trajectoire de commande sur une surface tactile **caractérisé en ce que** :
- on réalise le procédé de détermination d'un angle élémentaire d'une trajectoire de commande tel que précédemment décrit et on mémorise l'angle élémentaire attribué au cours d'une étape élémentaire,
- on réitère l'étape élémentaire et on assemble successivement les angles élémentaires attribués, pour déterminer une variation angulaire de la trajectoire de commande.

Suivant d'autres caractéristiques du procédé de détection d'une variation angulaire d'une trajectoire de commande sur une surface tactile,
- on compare la trajectoire de commande à une bibliothèque de trajectoire de commande de référence pour retenir une trajectoire de commande présentant une forme significative correspondant à un critère de forme prédéfini,
- on détermine la forme de la trajectoire de commande à partir de la différence d'au moins deux angles élémentaires successifs,
- on détermine un sens de rotation de la trajectoire de commande à partir de la différence d'au moins deux angles élémentaires successifs,
- on compare le sens de rotation et l'angle élémentaire à un tableau de données de référence supplémentaire pour attribuer à la trajectoire de commande une position sur une surface tactile présentant la forme d'une couronne,
- on incrémente un compteur de tour lorsque la trajectoire de commande est supérieure à 360°.

L'invention a encore pour objet un module de commande comportant une surface tactile **caractérisé en ce qu'**il comporte une unité de traitement pour la mise en ouvre d'un procédé de détection d'une variation angulaire d'une trajectoire de commande tel que précédemment décrit.

Suivant d'autres caractéristiques du module de commande,
- le module de commande comporte un écran d'affichage connecté à l'unité de traitement, apte à afficher une trajectoire de commande,
- le module de commande est apte à commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur, des commandes de réglages d'un siège de véhicule automobile.

D'autres avantages et caractéristiques apparaîtront à la lecture de la description de l'invention, ainsi que des dessins annexés sur lesquels :
- la figure 1 est une vue schématique d'une surface tactile sur laquelle on a représenté différentes formes de trajectoires de commande,
- la figure 2 représente un tableau de donnée de référence,
- la figure 3 illustre un exemple d'angle élémentaire intermédiaire,
- la figure 4 est un organigramme montrant les différentes étapes d'un exemple de procédé de détermination d'un angle élémentaire et,
- la figure 5 est un organigramme montrant les différentes étapes d'un exemple de procédé de détection d'une variation angulaire d'une trajectoire de commande.

Sur ces figures, les éléments identiques portent les mêmes numéros de référence. Par souci de clarté, les étapes du procédé de détermination d'un angle élémentaire sont numérotées à partir de 100 et les étapes du procédé de détection d'une variation angulaire d'une trajectoire de commande sont numérotées à partir de 200.

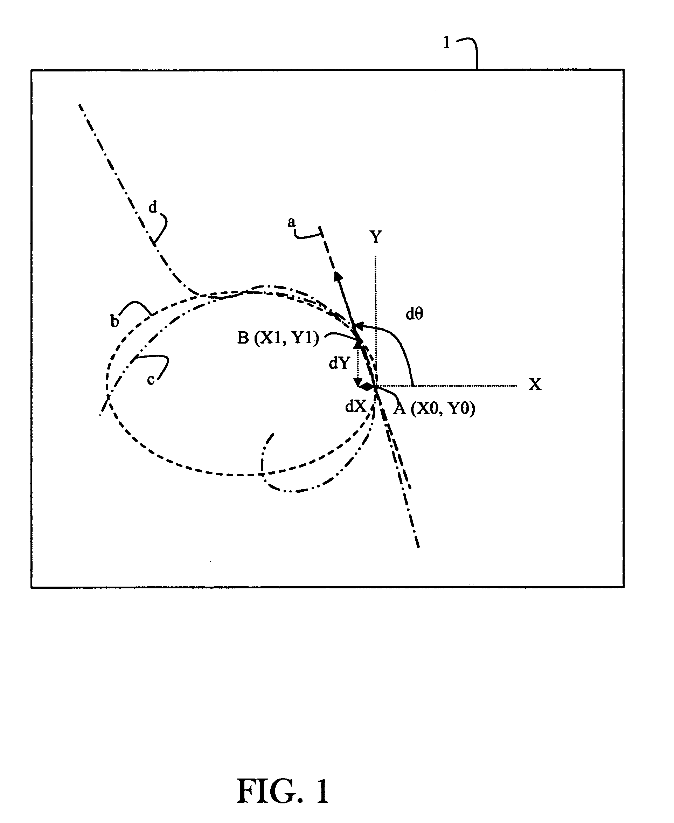

La figure 1 représente une surface tactile 1, notamment destinée à être intégrée dans un module de commande électrique, pour par exemple commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur ou des commandes de réglages d'un siège de véhicule automobile.

La surface tactile 1 utilise par exemple des capteurs de résistances sensibles à la pression (également connu sous le nom de capteur FSR pour « Force Sensing Resistor » en anglais) et, est susceptible de fournir un signal à une unité de traitement d'un module de commande, correspondant à une zone d'appui d'un doigt d'un utilisateur appliqué sur la surface tactile 1.

Une zone d'appui correspond à une pression appliquée par un doigt de commande par exemple en modifiant la résistance ohmique du capteur, de résistance sensible à la pression de la surface tactile 1.

Par l'application d'une tension adaptée, l'unité de traitement mesure le signal correspondant à la pression appliquée et/ou la localisation de l'endroit où la pression est exercée sur la surface tactile 1.

L'unité de traitement du module de commande, tel qu'un microcontrôleur, par exemple de type 8 bits, comporte une mémoire de programme, pour la mise en oeuvre d'un logiciel apte à exécuter un procédé de détection d'une variation angulaire d'une trajectoire de commande.

On a représenté sur la figure 1 quatre exemples de trajectoires de commande dont une première présente la forme d'une droite a, une deuxième présente la forme d'une ellipse b, une troisième présente la forme d'une spirale c et une quatrième présente une forme quelconque d.

Le module de commande peut comporter un écran d'affichage connecté à l'unité de traitement qui est apte à afficher une trajectoire de commande telle que représentée sur la figure 1.

Le procédé de détermination de l'angle élémentaire de la trajectoire de commande sur la surface tactile 1 comporte une première étape dans laquelle on mesure deux valeurs de déplacements élémentaires |dX|, |dY| selon deux axes perpendiculaires X, Y au cours d'une durée prédéterminée dT.

La durée prédéterminée dT est de préférence une période d'horloge de l'unité de traitement, par exemple de l'ordre de 10 msec.

Les valeurs des déplacements élémentaires |dX| et |dY| représentent la projection selon les deux axes perpendiculaires X et Y, d'un déplacement élémentaire de la trajectoire de commande sur la surface tactile 1, au cours de la durée prédéterminée dT. La figure 1 illustre un exemple du déplacement AB et des projections |dX|, |dY| selon les axes X et Y.

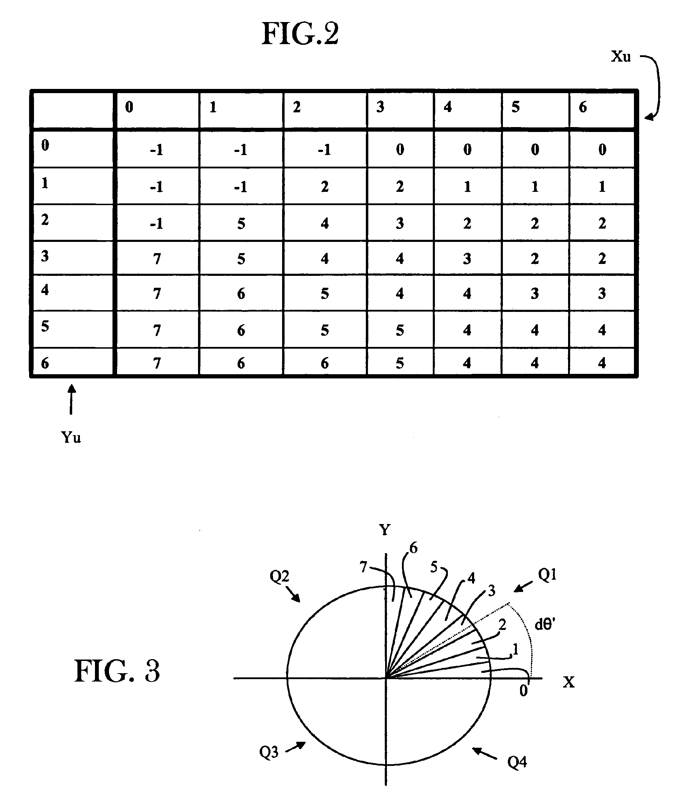

Puis, on compare lesdites valeurs |dX|, |dY| à des plages de valeurs unitaires de déplacements élémentaires Yu et Yu d'un tableau de données de référence (figure 2). Dans l'exemple de la figure 2, ces plages de valeurs unitaires Xu, Yu sont schématisées par des entiers allant de 0 à 6 pour chacun des deux axes perpendiculaires X et Y.

A titre d'exemple, une plage de valeur unitaire de déplacement élémentaire Xu et/ou Yu est de l'ordre de 2 mm, ce qui est suffisant pour la détection du mouvement d'un doigt sur la surface tactile.

Pour chaque couple de plage de valeur unitaire de déplacement élémentaire Xu, Yu, le tableau fournit une donnée de référence correspondante, représentative d'un angle.

Le résultat de cette comparaison permet ensuite d'attribuer une donnée de référence représentative d'un angle à un angle élémentaire dθ de la trajectoire de commande.

Ainsi, le procédé utilise un tableau de données de référence prérentrées pour émuler partiellement les fonctions trigonométriques permettant d'obtenir rapidement et sans calcul une information de l'angle élémentaire dθ de la trajectoire de commande.

De préférence, la donnée de référence est un nombre entier ou un caractère, ce qui permet de ne pas utiliser de nombre décimaux, consommateurs de capacité mémoire. On a attribué dans le tableau de la figure 2, un nombre entier positif ou négatif (-1, 0, 1, 2, 3, 4, 5, 6) comme donnée de référence représentative d'un angle.

Avantageusement, le procédé de détermination comporte une étape supplémentaire dans laquelle on détermine d'abord un angle élémentaire intermédiaire dθ' (figure 3) à partir duquel on détermine ensuite l'angle élémentaire dθ de la trajectoire de commande relatif à un axe X, d'après le sens d'orientation de chaque déplacement élémentaire dX, dY.

De préférence, on détermine d'abord un angle élémentaire intermédiaire dθ' sur un quart de cercle Q1 puis on détermine si l'angle élémentaire dθ de la trajectoire est réalisée de 0 à 90° sur le premier quart de cercle Q1, de 90° à 180° sur le deuxième quart de cercle Q2, de 180° à 270° sur le troisième quart de cercle Q3 ou de 270° à 360° sur le quatrième quart de cercle Q4.

Ainsi, si les deux déplacements élémentaires dX et dY sont orientés dans le même sens que les deux axes X et Y, alors l'angle élémentaire dθ est compris dans le premier quart de cercle Q1, soit entre 0 et 90°. L'angle élémentaire dθ est donc égal à l'angle élémentaire intermédiaire dθ'.

En revanche, si le déplacement élémentaire dX selon un premier axe X est orienté dans le même sens que cet axe X mais que le déplacement élémentaire dY selon le deuxième axe Y est orienté dans le sens opposé de celui-ci, alors l'angle élémentaire dθ est compris dans le quatrième quart de cercle Q4, autrement dit entre 0° et -90° ou encore entre 270° à 360°. L'angle élémentaire dθ est donc égal au négatif de l'angle élémentaire intermédiaire dθ'.

Egalement, si le déplacement élémentaire dX est orienté dans le sens contraire à l'axe X mais que le déplacement élémentaire dY est orienté dans le même sens que celui-ci, alors l'angle élémentaire dθ est compris dans le deuxième quart de cercle Q2, autrement dit entre 90° et 180°. L'angle élémentaire dθ est donc égal à la différence entre 180° et l'angle élémentaire intermédiaire dθ'.

Enfin, si les déplacements élémentaires dX et dY sont orientés dans le sens opposé des sens des axes X et Y, alors l'angle élémentaire dθ est compris dans le troisième quart de cercle Q3, c'est à dire entre 180° et 270°. L'angle élémentaire dθ est donc égal à la somme de 180° et de l'angle élémentaire intermédiaire dθ'.

Grâce à ce découpage d'angle pour le calcul de l'angle élémentaire dθ, on diminue la taille du tableau de données de référence. En effet, il suffit d'avoir les valeurs représentatives des angles sur une portion de cercle Q1 pour pouvoir déterminer un angle sur un cercle complet. La taille du tableau de donnée de référence dépend alors de la résolution souhaitée pour l'angle élémentaire dθ.

Dans l'exemple illustré en figure 2, le tableau comprend ainsi des données représentatives d'un angle compris entre 0 et 90°. Le quart de cercle Q1 est divisé en secteurs auxquels on a attribué une donnée représentative de l'angle du secteur. Ainsi, le premier quart de cercle Q1 est divisé en 8 secteurs pour une résolution angulaire de 11, 25° (voir figure 3).

Avantageusement, la donnée de référence est représentative d'un angle nul lorsque la somme des deux valeurs de déplacements élémentaires |dX|, |dY| est inférieure à un seuil prédéterminé.

Dans le tableau de la figure 2, le nombre négatif -1 est représentatif d'un angle nul. On considère en effet dans cet exemple, que l'angle de trajectoire élémentaire dθ est nul pour un déplacement dont la somme des deux valeurs de déplacements élémentaires |dX|, |dY| est inférieure ou égale à 2 mm.

De préférence, on divise une valeur de déplacement élémentaire |dX|, |dY| selon un axe X, Y par un nombre entier, de préférence par deux, si la valeur du déplacement |dX|, |dY| est supérieure à la valeur unitaire de déplacement élémentaire |Xu|, |Yu| maximale selon cet axe X, Y dans le tableau de données de référence.

Ainsi, on limite la taille du tableau de donnée de référence et en outre, on peut s'affranchir des valeurs de déplacement aberrantes.

Afin de déterminer une variation angulaire d'une trajectoire de commande, un procédé de détection de variation angulaire comporte une étape élémentaire au cours de laquelle on réalise le procédé de détermination d'un angle élémentaire d'une trajectoire de commande tel que précédemment décrit et on mémorise l'angle élémentaire attribué dθ.

Puis, on réitère l'étape élémentaire et on assemble successivement les angles élémentaires attribués dθ, pour déterminer une variation angulaire de la trajectoire de commande.

On peut alors identifier la forme de la trajectoire de commande.

Par exemple, on compare la trajectoire de commande à une bibliothèque de trajectoire de commande de référence pour retenir une trajectoire de commande présentant une forme significative correspondant à un critère de forme prédéfini.

Alternativement, on détermine la forme de la trajectoire de commande à partir de la différence d'au moins deux angles élémentaires successifs dθ, par rapport à un axe X, Y.

Dans le cas où l'on a déterminé une forme sensiblement circulaire de la trajectoire de commande, il est en outre possible de déterminer le sens de rotation de la trajectoire à partir de la différence d'au moins deux angles élémentaires successifs dθ par rapport à un axe X, Y.

De manière avantageuse, on compare le sens de rotation et l'angle élémentaire à un tableau de données de référence supplémentaire pour attribuer à la trajectoire de commande une position sur une surface tactile présentant la forme d'une couronne.

Ainsi, on s'affranchit de la connaissance de la position du centre du mouvement sensiblement circulaire parcouru par le doigt de l'utilisateur, celui-ci pouvant en outre varier si par exemple la trajectoire de commande présente la forme d'une ellipse.

On peut en outre incrémenter un compteur de tour pour chaque variation angulaire de la trajectoire de commande supérieure à 360°.

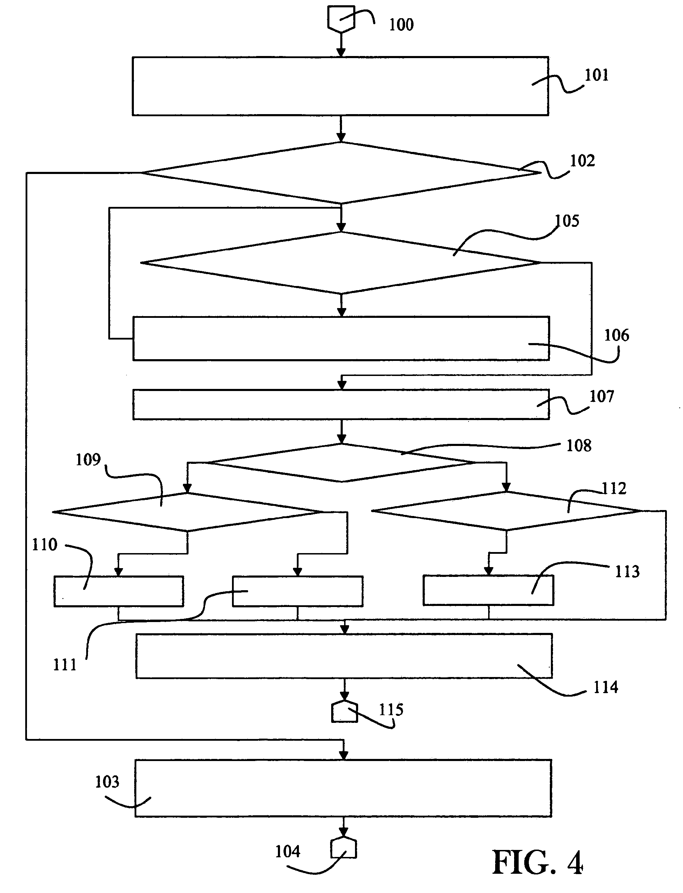

La figure 4 illustre les différentes étapes d'un exemple de procédé de détermination de l'angle élémentaire.

Ainsi, lors de la mise en oeuvre du procédé, on commence par mesurer les coordonnées X0 et Y0 d'un premier appui A sur une surface tactile 1, au cours d'une phase d'initialisation 100.

Après une durée prédéterminée dT, on mesure les nouvelles coordonnées X1 et Y1 d'un deuxième appui B sur la surface tactile 1, puis on détermine les deux valeurs de déplacements élémentaires |dX| et |dY| (étape 101).

Ensuite, à l'étape 102, on vérifie si la somme des deux déplacements élémentaires |dX|, |dY| est supérieure à un seuil prédéterminé.

Si la somme des deux déplacements élémentaires |dX|, |dY| est inférieure ou égale au seuil prédéterminé alors on attribue une donnée de référence représentative d'un angle nul à l'angle élémentaire dθ (étape 103) et le procédé de détermination de l'angle élémentaire de la trajectoire de commande prend fin (étape 104).

Si au contraire, la somme des deux déplacements élémentaires |dX|, |dY| est supérieure au seuil prédéterminé alors on estime pouvoir déterminer l'angle élémentaire dO avec suffisamment de précision.

Dans ce dernier cas, on détermine alors si une des deux (ou les deux) valeurs de déplacements élémentaires |dX|, |dY| sont supérieures aux valeurs unitaires de déplacement élémentaire |Xu|, |Yu| maximales du tableau de données de référence (losange 105).

Si c'est le cas, alors on divise la valeur du déplacement élémentaire |dX|, |dY| Par exemple par deux, (étape 106) jusqu'à ce qu'on détermine une valeur de déplacement élémentaire |dX|, |dY| inférieure à la valeur unitaire maximales |Xu|, |Yu| du tableau.

Ensuite, à l'étape 107, lorsque la valeur de déplacement élémentaire |dX|, |dY| est compatible avec les valeurs unitaires élémentaires de déplacement |Xu|, |Yu|, on compare ces valeurs aux plages de valeurs unitaires de déplacements élémentaires Xu, Yu du tableau et on attribue une donnée de référence représentative d'un angle à l'angle élémentaire intermédiaire dθ' de la trajectoire de commande.

Ensuite, on détermine l'angle élémentaire dθ de la trajectoire de commande relatif à un axe X, Y d'après le sens d'orientation de chaque déplacement élémentaire dX, dY.

Pour cela, on détermine si le déplacement élémentaire dX selon le premier axe X est dans le sens contraire de l'axe X (losange 108).

Si oui, on détermine alors si le déplacement élémentaire dY selon le deuxième axe Y est dans le sens contraire de cet axe Y (losange 109).

Si c'est le cas, alors l'angle élémentaire dθ est égale à 180° ajouté à l'angle élémentaire intermédiaire dθ' au cours de l'étape 110.

Si le déplacement élémentaire dY est dans le même sens que l'axe Y alors l'angle élémentaire dθ est égale à 180° auquel on soustraie l'angle élémentaire intermédiaire dθ' au cours de l'étape 111.

Si en revanche, le déplacement élémentaire dX selon le premier axe X est dans le même sens que l'axe X et que le déplacement élémentaire dY selon le deuxième axe Y est dans le sens contraire de cet axe Y alors on inverse le signe de l'angle intermédiaire dθ' au cours de l'étape 113.

Si enfin les déplacements élémentaires dX, dY sont dans le même sens que les deux axes X et Y alors on passe à l'étape suivante 114 en attribuant dθ' à dθ.

Puis on mémorise l'angle élémentaire dθ déterminé, on affecte les valeurs des coordonnées Y1, X1 du deuxième appui B aux coordonnées du premier appui X0, Y0 et on termine le procédé à l'étape 115.

Avantageusement, on réitère cette étape élémentaire et on assemble successivement les angles élémentaires attribués dθ, pour déterminer une variation angulaire de la trajectoire de commande.

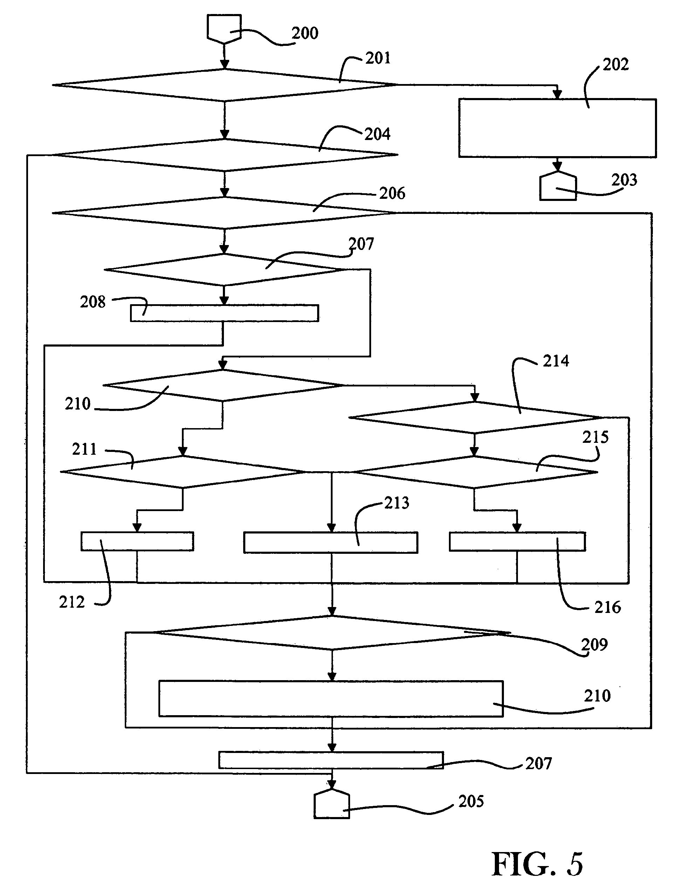

La figure 5 illustre les différentes étapes d'une mode de réalisation particulier du procédé de détection d'une variation angulaire pour lequel on a déterminé que la trajectoire de commande possède une forme sensiblement circulaire ou pour lequel la surface tactile présente une forme sensiblement circulaire, telle qu'une couronne.

Le procédé comporte une première phase d'initialisation 200 au cours de laquelle on initialise la valeur de l'angle élémentaire dθ précédent.

Puis au cours de l'étape 201, on détermine si un déplacement est réalisé sur la surface tactile. Si aucun déplacement n'est observé, on réinitialise la valeur d'angle élémentaire précédent dθ au cours de l'étape 202 et on termine le procédé à l'étape 203.

Sinon, au cours de l'étape élémentaire 204 on réalise le procédé de détermination d'un angle élémentaire dθ d'une trajectoire de commande et on mémorise l'angle élémentaire attribué dθ.

Si l'angle élémentaire dθ est nul, alors on termine le procédé à l'étape 205.

Sinon, dans le cas où l'angle élémentaire dθ précédent est nul (étape 206), on attribue l'angle élémentaire dθ à l'angle élémentaire précédent dθ à l'étape 207 et on termine le procédé (étape 205).

Sinon, on calcule la différence entre les deux angles élémentaires successifs dθ et on détermine si cette différence est égale à 180° (étape 207). Si c'est le cas, alors on a déterminé que la trajectoire de commande à effectué un demi-tour complet (étape 208) et on passe alors à l'étape 209.

Sinon, on détermine le signe de la différence entre les deux angles élémentaires successifs dθ. Si le signe est positif, alors l'angle élémentaire dθ est supérieur à l'angle élémentaire précédent dθ et la trajectoire de commande tourne à priori dans le sens trigonométrique.

On vérifie ensuite (étape 211) si au cours de l'étape précédente, on avait également déterminé une rotation trigonométrique. Si c'était le cas alors on valide le sens de rotation trigonométrique (étape 212).

Si ce n'était pas le cas à l'étape précédente du procédé, alors le sens de rotation est indéterminé (étape 213) et on passe à l'étape suivante 209.

En revanche, si le signe est négatif, alors l'angle élémentaire dθ est inférieur à l'angle élémentaire précédent dθ et la trajectoire de commande tourne à priori dans le sens horaire (étape 214).

On vérifie alors (étape 215) si au cours de l'étape précédente, on avait également une rotation horaire. Si c'était le cas également alors on valide le sens horaire de rotation (étape 216).

Si ce n'était pas le cas à l'étape précédente, alors le sens de rotation est indéterminé (étape 213) et on passe à l'étape suivante 209.

Dans le cas où la surface tactile présente la forme d'une couronne et si le sens de rotation n'est pas indéterminé à l'étape 209, on compare le sens de rotation et l'angle élémentaire dθ à un tableau de données de référence supplémentaire pour attribuer à la trajectoire de commande une position sur la surface tactile (étape 210).

Puis, à l'étape 207, on attribue à la valeur angulaire élémentaire précédente dθ, la valeur angulaire élémentaire suivante dθ qui vient d'être déterminée, de manière à réinitialiser la valeur de la valeur angulaire élémentaire précédente dθ et ainsi pouvoir réitérer le procédé.

On comprend qu'un tel procédé de détection permet de déterminer rapidement et à moindre coût la position du doigt de commande sur la surface tactile.

## Revendications

1. Procédé de détermination d'un angle élémentaire d'une trajectoire de commande sur une surface tactile **caractérisé en ce que** :
- on mesure deux valeurs de déplacements élémentaires |dX|, |dY|) selon deux axes perpendiculaires (X, Y) au cours d'une durée prédéterminée (dT),
- on compare lesdites valeurs |dX|, |dY|) à des plages de valeurs unitaires de déplacements élémentaires (Xu, Yu) d'un tableau de données de référence et
- on attribue une donnée de référence représentative d'un angle à un angle élémentaire (dθ) de la trajectoire de commande.

2. Procédé de détermination selon la revendication 1, **caractérisé en ce que** la donnée de référence représentative d'un angle est un nombre entier ou un caractère.

3. Procédé de détermination selon l'une quelconque des revendications précédentes, **caractérisé en ce qu'**on détermine d'abord un angle élémentaire intermédiaire (dθ') à partir duquel on détermine ensuite l'angle élémentaire (dθ) de la trajectoire de commande relatif à un axe (X, Y) d'après le sens d'orientation de chaque déplacement élémentaire.

4. Procédé de détermination selon l'une quelconque des revendications précédentes, **caractérisé en ce que** ladite donnée de référence est représentative d'un angle nul lorsque la somme des deux valeurs de déplacements élémentaires |dX|, |dY|) est inférieure à un seuil prédéterminé.

5. Procédé de détermination selon l'une quelconque des revendications précédentes, **caractérisé en ce qu'**on divise une valeur de déplacement élémentaire (|dX|, |dY|) selon un axe (X, Y) par un nombre entier si la valeur dudit déplacement |dX|, |dY|) est supérieure à la valeur unitaire de déplacement élémentaire maximale (|Xu|, |Yu|) selon cet axe dans le tableau de données de référence.

6. Procédé de détection d'une variation angulaire d'une trajectoire de commande sur une surface tactile **caractérisé en ce que** :
- on réalise le procédé de détermination d'un angle élémentaire d'une trajectoire de commande selon l'une quelconque des revendications 1 à 5 et on mémorise l'angle élémentaire (dθ) attribué au cours d'une étape élémentaire,
- on réitère l'étape élémentaire et on assemble successivement les angles élémentaires attribués (dθ), pour déterminer une variation angulaire de la trajectoire de commande.

7. Procédé de détection selon la revendication 6, **caractérisé en ce qu'**on compare la trajectoire de commande à une bibliothèque de trajectoire de commande de référence pour retenir une trajectoire de commande présentant une forme significative correspondant à un critère de forme prédéfini.

8. Procédé de détection selon la revendication 6, **caractérisé en ce qu'**on détermine la forme de la trajectoire de commande à partir de la différence d'au moins deux angles élémentaires successifs (dθ).

9. Procédé de détection selon l'une quelconque des revendications 6 ou 8, **caractérisé en ce qu'**on détermine un sens de rotation de la trajectoire de commande à partir de la différence d'au moins deux angles élémentaires successifs (dθ).

10. Procédé de détection selon la revendication 9, **caractérisé en ce qu'**on compare le sens de rotation et l'angle élémentaire (dθ) à un tableau de données de référence supplémentaire pour attribuer à la trajectoire de commande une position sur une surface tactile présentant la forme d'une couronne.

11. Procédé de détection selon l'une quelconque des revendications 9 ou 10, **caractérisé en ce qu'**on incrémente un compteur de tour lorsque la trajectoire de commande est supérieure à 360°.

12. Module de commande comportant une surface tactile (1) **caractérisé en ce qu'**il comporte une unité de traitement pour la mise en oeuvre d'un procédé de détection d'une variation angulaire d'une trajectoire de commande selon l'une quelconque des revendications 6 à 11.

13. Module de commande selon la revendication 12, **caractérisé en ce qu'**il comporte un écran d'affichage connecté à l'unité de traitement, apte à afficher une trajectoire de commande.

14. Module de commande selon l'une quelconque des revendications 12 à 13, **caractérisé en ce qu'**il est apte à commander les fonctions d'au moins un ensemble d'organes électriques ou électroniques d'un véhicule automobile, tel qu'un système de climatisation, un système audio, un système de navigation, un système de téléphonie, des commandes de lève-vitres motorisés, des commandes de réglages de rétroviseurs extérieurs, des commandes de réglage en position d'un toit ouvrant, des commandes d'éclairage d'intérieur, des commandes de réglages d'un siège de véhicule automobile.

## Claims

1. Method for determining an elementary angle of a control trajectory on a touch surface **characterized in that**:
- two values of elementary displacements (|dX|, | dY|) are measured along two perpendicular axes (X, Y) in the course of a predetermined duration (dT),
- said values (|dX|, ldYl) are compared with spans of unit values of elementary displacements (Xu, Yu) of a reference data table and
- a reference datum representative of an angle is ascribed to an elementary angle (dθ) of the control trajectory.

2. Method of determination according to Claim 1, **characterized in that** the reference datum representative of an angle is an integer number or a character.

3. Method of determination according to any one of the preceding claims, **characterized in that** an intermediate elementary angle (dθ') is firstly determined, on the basis of which is thereafter determined the elementary angle (dθ) of the control trajectory relating to an axis (X, Y) in accordance with the sense of orientation of each elementary displacement.

4. Method of determination according to any one of the preceding claims, **characterized in that** said reference datum is representative of a zero angle when the sum of the two values of elementary displacements (|dX|, |dY|) is less than a predetermined threshold.

5. Method of determination according to any one of the preceding claims, **characterized in that** an elementary displacement value (|dX|, |dY|) along an axis (X, Y) is divided by an integer number if the value of said displacement (|dX|, |dY|) is greater than the unit value of maximum elementary displacement (I Xu|, |Yu|) along this axis in the reference data table.

6. Method for detecting an angular variation of a control trajectory on a touch surface **characterized in that**:
- the method for determining an elementary angle of a control trajectory according to any one of Claims 1 to 5 is carried out and the elementary angle (dθ) ascribed in the course of an elementary step is stored,
- the elementary step is repeated and the ascribed elementary angles (dθ) are successively assembled so as to determine an angular variation of the control trajectory.

7. Detection method according to Claim 6, **characterized in that** the control trajectory is compared with a reference control trajectory library so as to retain a control trajectory exhibiting a significant shape corresponding to a predefined shape criterion.

8. Detection method according to Claim 6, **characterized in that** the shape of the control trajectory is determined on the basis of the difference of at least two successive elementary angles (dθ).

9. Detection method according to any one of Claims 6 or 8, **characterized in that** a direction of rotation of the control trajectory is determined on the basis of the difference of at least two successive elementary angles (dθ).

10. Detection method according to Claim 9, **characterized in that** the direction of rotation and the elementary angle (dθ) are compared with an additional reference data table so as to ascribe to the control trajectory a position on a touch surface exhibiting the shape of a ring.

11. Detection method according to any one of Claims 9 or 10, **characterized in that** a revolution counter is incremented when the control trajectory is greater than 360°.

12. Control module comprising a touch surface (1) **characterized in that** it comprises a processing unit for the implementation of a method for detecting an angular variation of a control trajectory according to any one of Claims 6 to 11.

13. Control module according to Claim 12, **characterized in that** it comprises a display screen connected to the processing unit, able to display a control trajectory.

14. Control module according to any one of Claims 12 to 13, **characterized in that** it is able to control the functions of at least one set of electrical or electronic members of a motor vehicle, such as an air-conditioning system, an audio system, a navigation system, a telephone system, motorized window winder controls, controls for adjusting exterior rear-view mirrors, controls for adjusting the position of a sunroof, controls for interior lighting, controls for adjusting a motor vehicle seat.

## Patentansprüche

1. Verfahren zur Bestimmung eines Elementarwinkels einer Steuerbahn auf einer Berührungsfläche, **dadurch gekennzeichnet, dass**:
- zwei Elementarverschiebungswerte (|dX|, |dY|) gemäß zwei lotrechten Achsen (X, Y) während einer vorbestimmten Dauer (dT) gemessen werden,
- die Werte (|dX|, |dY|) mit Einheitswertbereichen von Elementarverschiebungen (Xu, Yu) einer Bezugsdatentabelle verglichen werden, und
- einem Elementarwinkel (dθ) der Steuerbahn ein für einen Winkel repräsentativer Bezugsdatenwert zugeteilt wird.

2. Bestimmungsverfahren nach Anspruch 1, **dadurch gekennzeichnet, dass** der für einen Winkel repräsentative Bezugsdatenwert eine ganze Zahl oder ein Zeichen ist.

3. Bestimmungsverfahren nach einem der vorhergehenden Ansprüche, **dadurch gekennzeichnet, dass** zuerst ein Zwischen-Elementarwinkel (dθ') bestimmt wird, von dem ausgehend anschließend der Elementarwinkel (dθ) der Steuerbahn bezüglich einer Achse (X, Y) gemäß der Orientierungsrichtung jeder Elementarverschiebung bestimmt wird.

4. Bestimmungsverfahren nach einem der vorhergehenden Ansprüche, **dadurch gekennzeichnet, dass** der Bezugsdatenwert für einen Winkel Null repräsentativ ist, wenn die Summe der zwei Elementarverschiebungswerte (|dX|, |dY|) geringer als eine vorbestimmte Schwelle ist.

5. Bestimmungsverfahren nach einem der vorhergehenden Ansprüche, **dadurch gekennzeichnet, dass** ein Elementarverschiebungswert (|dX|, |dY|) gemäß einer Achse (X, Y) durch eine ganze Zahl geteilt wird, wenn der Wert der Verschiebung (|dX|, |dY|) höher als der maximale Elementarverschiebungs-Einheitswert (|Xu|, |Yu|) gemäß dieser Achse in der Bezugsdatentabelle ist.

6. Verfahren zur Erfassung einer Winkeländerung einer Steuerbahn auf einer Berührungsfläche, **dadurch gekennzeichnet, dass**:
- das Verfahren zur Bestimmung eines Elementarwinkels einer Steuerbahn nach einem der Ansprüche 1 bis 5 durchgeführt wird, und dass der im Laufe eines Elementarschritts zugeteilte Elementarwinkel (dθ) gespeichert wird,
- der Elementarschritt wiederholt wird, und nacheinander die zugeteilten Elementarwinkel (dθ) zusammengefügt werden, um eine Winkeländerung der Steuerbahn zu bestimmen.

7. Erfassungsverfahren nach Anspruch 6, **dadurch gekennzeichnet, dass** die Steuerbahn mit einer Steuerbahn-Bezugsbibliothek verglichen wird, um eine Steuerbahn mit einer signifikanten Form zu wählen, die einem vordefinierten Formkriterium entspricht.

8. Erfassungsverfahren nach Anspruch 6, **dadurch gekennzeichnet, dass** die Form der Steuerbahn ausgehend von der Differenz von mindestens zwei aufeinanderfolgenden Elementarwinkeln (dθ) bestimmt wird.

9. Erfassungsverfahren nach einem der Ansprüche 6 oder 8, **dadurch gekennzeichnet, dass** eine Drehrichtung der Steuerbahn ausgehend von der Differenz von mindestens zwei aufeinanderfolgenden Elementarwinkeln (dθ) bestimmt wird.

10. Erfassungsverfahren nach Anspruch 9, **dadurch gekennzeichnet, dass** die Drehrichtung und der Elementarwinkel (dθ) mit einer zusätzlichen Bezugsdatentabelle verglichen werden, um der Steuerbahn eine Position auf einer Berührungsfläche zuzuteilen, die die Form eines Rings hat.

11. Erfassungsverfahren nach einem der Ansprüche 9 oder 10, **dadurch gekennzeichnet, dass** ein Umdrehungszähler inkrementiert wird, wenn die Steuerbahn größer als 360° ist.

12. Steuermodul, das eine Berührungsfläche (1) aufweist, **dadurch gekennzeichnet, dass** es eine Verarbeitungseinheit zur Durchführung eines Erfassungsverfahrens einer Winkeländerung einer Steuerbahn nach einem der Ansprüche 6 bis 11 aufweist.

13. Steuermodul nach Anspruch 12, **dadurch gekennzeichnet, dass** es einen mit der Verarbeitungseinheit verbundenen Anzeigebildschirm aufweist, der eine Steuerbahn anzeigen kann.

14. Steuermodul nach einem der Ansprüche 12 bis 13, **dadurch gekennzeichnet, dass** es die Funktionen mindestens einer Einheit von elektrischen oder elektronischen Bauteilen eines Kraftfahrzeugs steuern kann, wie eine Klimaanlage, ein Audiosystem, ein Navigationssystem, ein Telefonsystem, Steuerungen motorisierter Fensterheber, Steuerungen von Außenrückspiegeleinstellungen, Steuerungen zur Positionseinstellung eines Schiebedachs, Innenbeleuchtungssteuerungen, Steuerungen von Einstellungen eines Kraftfahrzeugsitzes.
